# EUROPÄISCHE PATENTANMELDUNG

(11) **EP 2 523 334 A1**
(43) Veröffentlichungstag der Anmeldung: **14.11.2012**
(21) Anmeldenummer: 11165628.6
(22) Anmeldetag: 11.05.2011
(51) Int. Cl.: H02M 5/458, H02J 7/34

(54) **Frequenzumrichter und Verfahren zum Betreiben desselben**

(71) Anmelder: SIEMENS AKTIENGESELLSCHAFT, 80333 München (DE)
(72) Erfinder: Dillig, Reinhold, 96117, Memmelsdorf (DE); Herrmann, Bernd, 91074, Herzogenaurach (DE); Schwinn, Thomas, 91074, Herzogenaurach (DE); Benesch, Norbert, 90562, Heroldsberg (DE); Lorz, Roland, 91341, Röttenbach (DE); Roppelt, Bernd, 96191, Viereth-Trunstadt (DE); Schierling, Hubert, 91052, Erlangen (DE)

(57) **Zusammenfassung**

Ein Frequenzumrichter (26) zum Betreiben einer elektrischen Maschine kann eine Einspeiseeinheit (28) und einen Umrichter (32***,*** 32***'***) aufweisen, die miteinander über einen Gleichspannungs-Zwischenkreis (30) verschaltet sind. In dem Zwischenkreis (30) können dabei ein oder mehrere Zwischenkreiskondensatoren (46) bereitgestellt sein. Bei einem solchen Frequenzumrichter (26) soll ein ausreichender Schutz für dessen Einspeiseeinheit (28) gegen eine Beschädigung von deren Komponenten (34) bereitgestellt werden. Bei dem erfindungsgemäßen Frequenzumrichter weist der Zwischenkreis (30) eine Schalteinrichtung (42) mit einem Halbleiterschalter (54) auf. Durch die Schalteinrichtung (42) ist der Zwischenkreis in einen einspeiseseitigen (40) und einen umrichterseitigen (38) Teil aufgeteilt. Der Zwischenkreiskondensator (46) ist in dem umrichterseitigen Teil (38) angeordnet. Mittels der Schalteinrichtung (42) kann ein von der Einspeiseeinheit (28) in den umrichterseitigen Teil (38) des Zwischenkreises (30) fließender elektrischer Strom unterbrochen werden.

## Beschreibung

Die Erfindung betrifft einen Frequenzumrichter zum Betreiben einer elektrischen Maschine an einem elektrischen Versorgungsnetz. Der Frequenzumrichter weist eine Einspeiseeinheit auf, die über einen Gleichspannungs-Zwischenkreis mit einem Umrichter gekoppelt ist. In dem Gleichspannungs-Zwischenkreis, oder kurz Zwischenkreis, ist zumindest ein Zwischenkreiskondensator bereitgestellt. Die Erfindung betrifft auch ein Verfahren zum Betreiben des Frequenzumrichters.

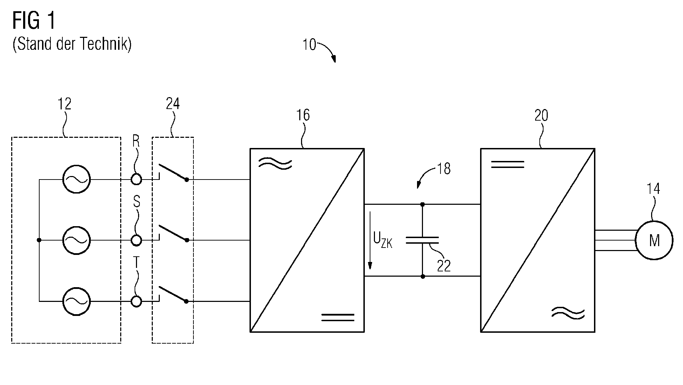

Ein Frequenzumrichter der genannten Art ist aus der DE 197 39 553 A1 bekannt. Die prinzipielle Funktionsweise eines Frequenzumrichters ist anhand der schematischen Darstellung in FIG 1 im Folgenden näher erläutert. Danach kann mittels eines Frequenzumrichters 10 elektrische Energie zwischen einem Wechselspannungs-Versorgungsnetz 12, im Folgenden kurz als Netz bezeichnet, und einer elektrischen Maschine 14 ausgetauscht werden. Die elektrische Maschine 14 kann ein Elektromotor oder ein Generator sein. Entsprechend erfolgt der Austausch der elektrischen Energie entweder vom Netz 12 zur Maschine 14 oder umgekehrt.

Mittels des Frequenzumrichters 10 ist es dabei möglich, eine Umwandlung zwischen einer Netz-Wechselspannung mit vorgegebener Netzfrequenz einerseits und einer für den Betrieb der elektrischen Maschine 14 nötigen Wechselspannung mit wählbarer Frequenz andererseits durchzuführen. Die Umwandlung erfolgt in zwei Schritten: Eine netzseitige Einspeiseeinheit 16 des Frequenzumrichters 10 bewirkt eine Umwandlung zwischen der Netz-Wechselspannung und einer Gleichspannung U_{ZK} eines Zwischenkreises 18, der die Einspeiseeinheit 16 mit einem Umrichter 20 verbindet. Der Umrichter 20 wandelt zwischen der Gleichspannung U_{ZK} und einer Wechselspannung für die elektrische Maschine 14 um.

Das Netz 12 kann, wie hier dargestellt, ein Drehstromnetz mit drei Phasen R, S, T sein. Es kann sich bei dem Netz 12 aber z.B. auch um ein zweiphasiges Netz handeln. Auch die elektrische Maschine 14 kann eine Maschine mit einer beliebigen Anzahl von Phasen sein. Hier dargestellt ist eine dreiphasige Drehstrommaschine.

Handelt es sich bei der elektrischen Maschine um einen Elektromotor oder eine universell betreibbare Maschine im Motorbetrieb, so wirkt die Einspeiseeinheit 16 als Gleichrichter, mittels welchem elektrische Energie aus dem Netz 12 in den Zwischenkreis 18 eingespeist werden kann.

Um dagegen einen Generator als elektrische Maschine 14 betreiben zu können (oder die universell betreibbare Maschine im Generatorbetrieb) kann die Einspeiseeinheit 16 als Wechselrichter ausgebildet sein, der elektrische Energie aus dem Zwischenkreis 18 in das Netz 12 einspeist. Die Einspeiseeinheit 16 kann auch umschaltbar ausgestaltet sein, so dass sie abwechselnd als Gleich- und als Wechselrichter betreibbar ist.

Der Umrichter 20 kann wie die Einspeiseeinheit 16 ebenfalls als Gleich- oder Wechselrichter oder umschaltbar ausgestaltet sein.

In dem Zwischenkreis 18 sorgt ein Zwischenkreiskondensator 22 mit einer ausreichend großen Kapazität dafür, dass eine bei einem der Wandlungsschritte erzeugte Welligkeit der Gleichspannung U_{ZK} so weit geglättet ist, dass sie den zweiten Wandlungsschritt nicht beeinflusst. Bevorzugt ist die Zwischenkreiskondensator-Kapazität auch groß genug, um bei einem kurzzeitigen Ausfall der Netz-Wechselspannung für einige Millisekunden einen unterbrechungsfreien Betrieb der elektrischen Maschine zu ermöglichen.

Um die elektrische Maschine 14 als Motor zu betreiben, wird durch Schließen eines Hauptschützes 24 die Einspeiseeinheit 16 mit den Phasen R, S, T des Netzes 12 elektrisch verbunden. Die Einspeiseeinheit 16 erzeugt daraufhin beispielsweise durch eine Vollwellen-Gleichrichtung die Gleichspannung U_{ZK} in dem Zwischenkreis 18, wodurch der Zwischenkreiskondensator 22 aufgeladen wird. Dieser Ladevorgang wird im Folgenden als Vorladephase bezeichnet.

Nachdem der Zwischenkreiskondensator 22 so weit aufgeladen ist, dass die Gleichspannung U_{ZK} einen gewünschten Spannungswert erreicht hat, kann die elektrische Maschine 14 betrieben werden. Dazu erzeugt der Umrichter 20 aus der Gleichspannung U_{ZK} eine hier dreiphasige Wechselspannung, so dass in der elektrischen Maschine 14 ein Drehstrom fließt. Dieser Vorgang ist im Folgenden als Betriebsphase bezeichnet. Eine Frequenz des Drehstroms kann bei dem Umrichter 20 einstellbar sein.

Vor dem Schließen des Hauptschützes ist der Zwischenkreiskondensator in der Regel ungeladen. In der Vorladephase ergibt sich hierdurch das Problem, dass nach dem Schließen des Hauptschützes die Stromstärke des vom Netz in den ungeladenen Zwischenkreiskondensator fließenden Ladestroms aufgrund der großen Kapazität des Zwischenkreiskondensators so groß werden kann, dass Komponenten der Einspeiseeinheit beschädigt werden.

Die oben genannte Druckschrift lehrt hierzu, zwischen einem Gleichspannungsausgang der Einspeiseeinheit und dem betreffenden Anschluss des Zwischenkreiskondensators ein Strombegrenzungselement vorzusehen, welches den Ladestrom des Zwischenkreiskondensators auf einen von der Ladespannung weitgehend unabhängigen Wert begrenzt. Nachteilig bei dieser Lösung ist, dass es sich bei dem Strombegrenzungselement um einen speziell anzufertigenden Halbleiter handelt, um für einen bestimmten Anwendungsfall die passende Kennlinie zu erhalten.

Ein weiteres Problem ergibt sich, wenn während der Betriebsphase ein Kurzschluss im Zwischenkreis, im Umrichter oder in der elektrischen Maschine einen Kurzschlussstrom verursacht***,*** der aus dem Netz über die Einspeiseeinheit fließt. Dieser Kurzschlussstrom kann in der Regel nicht schnell genug durch das Hauptschütz unterbrochen werden, um eine Beschädigung der Komponenten der Einspeiseeinheit durch den Kurzschlussstrom zu verhindern.

Es ist Aufgabe der vorliegenden Erfindung, für einen Frequenzumrichter der beschriebenen Art einen ausreichenden Schutz für dessen Einspeiseeinheit bereitzustellen.

Die Aufgabe wird durch einen Frequenzumrichter gemäß Patentanspruch 1 und ein Verfahren gemäß Patentanspruch 8 gelöst. Vorteilhafte Weiterbildungen des erfindungsgemäßen Frequenzumrichters und des erfindungsgemäßen Verfahrens sind durch die Unteransprüche gegeben.

Der erfindungsgemäße Frequenzumrichter ist eine Weiterbildung des gattungsgemäßen Frequenzumrichters. Bei dem erfindungsgemäßen Frequenzumrichter weist der Zwischenkreis zusätzlich eine Schalteinrichtung mit einem Halbleiterschalter auf. Durch die Schalteinrichtung ist der Zwischenkreis in einen einspeiseseitigen und einen umrichterseitigen Teil aufgeteilt. Der umrichterseitige Teil ist dabei derjenige Teil des Zwischenkreises, in dem sich ein Anschluss des Umrichters befindet. Zudem ist der Zwischenkreiskondensator in dem umrichterseitigen Teil angeordnet. Mittels der Schalteinrichtung kann ein von der Einspeiseeinheit in den umrichterseitigen Teil des Zwischenkreises fließender elektrischer Strom unterbrochen werden.

Bei dem erfindungsgemäßen Frequenzumrichter ist sowohl ein gesteuertes Aufladen des Zwischenkreiskondensators in der Vorladephase als auch ein ausreichend schnelles Abschalten des umrichterseitigen Teils des Zwischenkreises im Falle eines Kurzschlusses möglich. Insgesamt ergibt sich damit ein verbesserter Schutz der Einspeiseeinheit.

Entsprechend wird der erfindungsgemäße Frequenzumrichter nach dem erfindungsgemäßen Verfahren in Betrieb genommen, indem die Einspeiseeinheit mit dem Netz gekoppelt wird und in einer Vorladephase der Zwischenkreiskondensator mit elektrischer Energie aus dem Netz aufgeladen wird. Hierbei wird ein Ladestrom des Zwischenkreiskondensators mittels des Halbleiters gesteuert, so dass eine Stromstärke des Ladestroms nicht zu groß wird. In einer Betriebsphase wird dann eine dauerhafte elektrische Verbindung der Einspeiseeinheit mit dem umrichterseitigen Teil des Zwischenkreises bereitgestellt. Bei einem Kurzschluss kann ein von der Einspeiseeinheit in den umrichterseitigen Teil fließender Kurzschlussstrom schnell unterbrochen werden, indem der Halbleiterschalter in einen sperrenden Zustand geschaltet wird.

Der Halbleiterschalter kann einen Transistor umfassen. Mit ihm ist eine Steuerung des Aufladestroms in der Vorladephase mit einer hohen Genauigkeit möglich. Zugleich kann mit einem Transistor ein Kurzschlussstrom mittels einer verhältnismäßig geringen Steuerspannung unterbrochen werden, so dass eine Steuerschaltung zum Erzeugen der Steuerspannung entsprechend einfach und kostengünstig bereitgestellt werden kann.

Bei dem Transistor kann es sich insbesondere um einen SiC-MOSFET (SiC - Siliziumcarbid; MOS - Metall-Oxid-Halbleiter; FET - Feldeffekttransistor) oder einen SiC-JFET (JFET - Sperrschicht-FET, Junction-FET) oder einen auf Silizium basierenden Transistor (Si-Transistor; Si - Silizium) handeln. SiC-basierte Transistoren sind sehr Hitzebeständig, so dass mittels des Frequenzumrichters auch elektrische Maschinen mit einer großen elektrischen Leistung, beispielsweise über 10 kW, betrieben werden können. Ein Frequenzumrichter mit einem Si-Transistor ist kostengünstiger herstellbar als einer mit einem Transistor auf der Basis von SiC. Bevorzugt werden selbstsperrende Halbleiterschalter verwendet, die sich bei einer Steuerspannung von 0 V in einem sperrenden Zustand befinden. Dadurch ist in vorteilhafter Weise verhindert, dass bei einem Ausfall der Steuerschaltung für den Halbleiterschalter ein unkontrollierter Strom in dem Zwischenkreis fließt.

Bei der Schalteinrichtung kann der Halbleiterschalter auch durch eine Kaskodenschaltung mit einem MOSFET und einem JFET bereitgestellt sein. Dann ergibt sich der Vorteil, dass in dem Zwischenkreis des Frequenzumrichters ein selbstsperrender Halbleiterschalter bereitgestellt ist, bei dem eine Oxidschicht des MOSFET gegen eine Beschädigung durch eine Überspannung geschützt ist. Die beiden Transistoren sind bevorzugt auf der Grundlage von SiC gefertigt.

Eine andere vorteilhafte Weiterbildung des erfindungsgemäßen Frequenzumrichters ergibt sich, wenn die Schalteinrichtung zusätzlich einen mechanischen Schalter zum Überbrücken des Halbleiterschalters aufweist. Dann kann in der Betriebsphase die Verlustleistung in der Schalteinrichtung durch Schließen des mechanischen Schalters reduziert werden.

Ein weiterer Vorteil ergibt sich, wenn der Zwischenkreis einspeiseseitig der Schalteinrichtung, d.h. in dem einspeiseseitigen Teil des Zwischenkreises, einen weiteren Kondensator als Kommutierungskapazität für die Einspeiseeinheit aufweist. Dieser Kommutierungskondensator ist also anders als der Zwischenkreiskondensator in dem Teil des Zwischenkreises angeordnet, der permanent mit der Einspeiseeinheit elektrisch verbunden ist. Als Kommutierungskondensator kann beispielsweise ein Folien- oder Keramikkondensator oder auch eine Schaltung aus mehreren solcher Kondensatoren verwendet werden.

Mit einer Kommutierungskapazität ist hier eine Kapazität gemeint, deren Wert wesentlich kleiner als der Kapazitätswert des Zwischenkreiskondensators ist. Bevorzugt beträgt die Kommutierungskapazität weniger zehn Prozent, insbesondere weniger als ein Prozent, der Zwischenkreiskondensator-Kapazität. Ein Betrag der Kommutierungskapazität kann auch in Abhängigkeit von einem Induktivitätswert der bereits beschriebenen Drosseln und/oder einer Netz-Induktivität des Netzes, an das der Frequenzumrichter angeschlossen ist, gewählt sein. Mittels der Kommutierungskapazität kann erreicht werden, dass eine beim Schalten von Komponenten der Einspeiseeinheit entstehende Induktionsspannung stets unterhalb eines für die Funktionstüchtigkeit des Frequenzumrichters kritischen Spannungswert bleibt. Indem die Kommutierungskapazität sehr viel kleiner als die Zwischenkreiskondensator-Kapazität gewählt ist, ist sichergestellt, dass durch einen Ladestrom des Kommutierungskondensators die Einspeiseeinheit beim Schließen des Hauptschützes nicht beschädigt wird.

Bei dem erfindungsgemäßen Frequenzumrichter ist es möglich, mehrere Zwischenkreiskondensatoren bereitzustellen, die dann in einer Reihen- oder Parallelschaltung miteinander verschaltet sind. In diesem Fall ist dann die Gesamtkapazität der verschalteten Zwischenkreiskondensatoren so groß zu wählen, dass der bereits beschriebene Glättungseffekt der Zwischenkreis-Gleichspannung bewirkt wird und gegebenenfalls auch ausreichend viel elektrische Energie für die Überbrückung eines kurzzeitigen Netzausfalls bereitgestellt ist. Bei einer Parallelschaltung können hierbei Kondensatoren mit einer geringeren Kapazität verwendet werden. Eine Reihenschaltung ermöglicht die Verwendung von Kondensatoren mit geringerer Durchbruchsspannung.

In einer anderen vorteilhaften Weiterbildung des erfindungsgemäßen Frequenzumrichters weist die Schalteinrichtung eine Diode auf, die dazu ausgelegt ist, einen Strom von dem umrichterseitigen Teil des Zwischenkreises zur Einspeiseeinheit zu leiten. Hierdurch kann bei einem Generatorbetrieb der elektrischen Maschine eine Einspeisung der erzeugten elektrischen Energie ins Netz ermöglicht werden, ohne dass der Halbleiterschalter der Schalteinrichtung für eine bidirektionale Stromleitung ausgelegt sein muss.

In Bezug auf das erfindungsgemäße Verfahren ergibt sich eine vorteilhafte Weiterbildung, wenn in der Vorladephase zum Steuern des Ladestromes ein getaktetes oder pulsweitenmoduliertes Steuersignal an einen Steuereingang des Halbleiterschalters übertragen wird. Bei dieser Ansteuerung ist ein Durchgangswiderstand des Halbleiterschalters abwechselnd sehr gering oder nahezu unendlich. Hierdurch kann in vorteilhafter Weise eine Erwärmung, die von dem Ladestrom in dem Halbleiterschalter verursacht wird, besonders gering gehalten werden.

Ein anderer Vorteil ergibt sich, wenn der Halbleiterschalter in der Vorladephase zum Steuern des Ladestromes als steuerbare Stromquelle betrieben wird und hierbei ein Laststrom durch den Halbleiterschalter durch Einstellen einer Steuerspannung oder eines Steuerstromes an einem Steuereingang des Halbleiterschalters gesteuert wird. Mit dem Betrieb als steuerbare Stromquelle ist hier gemeint, dass eine Stromstärke eines durch den Halbleiterschalter fließenden Stromes nahezu unabhängig von der Spannung ist, die über dem Halbleiterschalter in Flussrichtung des Stromes abfällt. Die Stromstärke ist stattdessen über das Steuersignal, d.h. die eingestellte Steuerspannung oder den eingestellten Steuerstrom, am Steuereingang einstellbar. Bei einem Bipolartransistor entspricht diese Betriebsweise dem Betrieb im aktiven oder Verstärkungsbereich, bei einem FET dem Betrieb im Sättigungsbereich. Durch Betreiben des Halbleiterschalters als steuerbare Stromquelle ergibt sich der Vorteil, dass eine Induktion von Spannungsspitzen (z. B. durch Drosseln) vermieden werden kann, indem der Halbleiterschalter mit einem Steuersignal angesteuert wird, das eine geringe zeitliche Änderung des Verlaufs aufweist.

Mittels einer Regelschaltung kann das Steuersignal für den Steuereingang des Halbleiterschalters auch in Abhängigkeit von einer Spannung im umrichterseitigen Teil des Zwischenkreises erzeugt werden. Dadurch ergibt sich der Vorteil, dass die elektrische Maschine schon in der Vorladephase gestartet oder bei geringer Leistung betrieben werden kann. Es ist dann auch möglich, beispielsweise mittels eines Zweipunktregelbetriebs, einen Anstieg eines Effektivwerts der Gleichspannung z. B. an eine höchstens zulässige Stromanstiegsrate des Zwischenkreiskondensators (bzw. der Zwischenkreiskondensatoren) anzupassen.

Der Halbleiterschalter kann in vorteilhafter Weise auch dazu genutzt werden, die Einspeiseeinheit während der Betriebsphase nach einem kurzzeitigen Netzausfall zu schützen, wenn beispielsweise eine Halbwelle in einer der Phasen ausgeblieben ist. Ein solcher Netzausfall führt zu einer Unterbrechung eines von der Einspeiseeinheit aus dem Netz empfangenen elektrischen Leistungsflusses, so dass der Zwischenkreiskondensator nahezu vollständig entladen sein kann, wenn der Leistungsfluss wieder einsetzt. Gemäß einer Weiterbildung des erfindungsgemäßen Verfahrens wird hier der Zwischenkondensator in einer Nachladephase durch Steuern des Nachladestromes in den Zwischenkreiskondensator mittels des Halbleiterschalters wieder aufgeladen. So ist ein kritischer Stromstärkewert des Nachladestromes vermieden.

Gemäß einer anderen Weiterbildung des erfindungsgemäßen Verfahrens wird ein Ladezustand des Zwischenkreiskondensators beobachtet. Falls nach einer vorbestimmten Zeitdauer nach Beginn der Vorladephase der Ladezustand ein vorbestimmtes Kriterium erfüllt, wenn also beispielsweise der Zwischenkondensator noch nicht zumindest zur Hälfte aufgeladen ist, wird die Vorladephase abgebrochen und die Schalteinrichtung in einen sperrenden Zustand geschaltet. So ist vorteilhaft vermieden, dass der Halbleiterschalter oder die Einspeiseeinheit beschädigt wird, wenn (umrichterseitig) im Zwischenkreis, im Umrichter selbst oder in der elektrischen Maschine bereits während der Vorladephase ein Kurzschluss vorhanden ist.

Im Folgenden wird die Erfindung anhand von Ausführungsbeispielen näher erläutert. Dazu zeigt:
- FIG 1: eine schematische Darstellung eines Frequenzumrichters gemäß dem Stand der Technik, mit dem eine elektrische Maschine an einem Netz betrieben wird;
- FIG 2: eine schematische Darstellung eines Frequenzumrichters gemäß einer Ausführungsform des erfindungsgemäβen Frequenzumrichters;
- FIG 3: einen Schaltplan einer Schalteinrichtung mit zusätzlichem mechanischen Schalter, die in einem Frequenzumrichter gemäß einer weiteren Ausführungsform des erfindungsgemäßen Frequenzumrichters eingebaut ist und
- FIG 4: einen Schaltplan einer Schalteinrichtung mit einer Kaskodenschaltung, die in einem Frequenzumrichter gemäß einer weiteren Ausführungsform des erfindungsgemäßen Frequenzumrichters eingebaut ist.

Die Ausführungsbeispiele stellen bevorzugte Ausführungsformen der Erfindung dar.

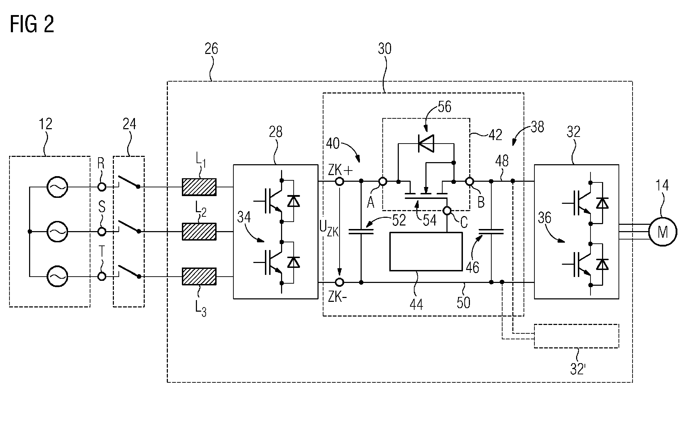

In FIG 2 ist ein Frequenzumrichter 26 gezeigt, der über ein Hauptschütz 24 an Phasen R, S, T eines Netzes 12 angeschlossen ist. An den Frequenzumrichter 26 ist eine elektrische Maschine 14 angeschlossen. Das Netz 12, das Hauptschütz 24 und die elektrische Maschine 14, die in FIG 2 gezeigt sind, entsprechen den in FIG 1 gezeigten Elementen mit den gleichen Bezugszeichen. Diese Elemente sind hier nicht noch einmal erläutert.

Bei dem Frequenzumrichter 26 ist eine Einspeiseeinheit 28 über einen Zwischenkreis 30 mit einem Umrichter 32 verschaltet. Neben dem Umrichter 32 können bei dem Frequenzumrichter 26 noch weitere Umrichter 32' vorgesehen sein.

Die Einspeiseeinheit 28 kann in bekannter Weise ausgestaltet sein. Sie weist in dem gezeigten Beispiel zum Gleichrichten der zwischen den Phasen R, S, T anliegenden Wechselspannungen drei Halbbrücken auf, von denen in FIG 2 der Übersichtlichkeit halber nur eine Halbbrücke 34 ohne weitere Verschaltungselemente dargestellt ist. Eine von der Einspeiseeinheit 28 erzeugte Gleichspannung U_{ZK} liegt zwischen einem Abgriffspunkt ZK+ einer Stromschiene für ein Pluspotential und einem Abgriffspunkt ZK- einer Stromschiene für ein Minuspotential an. Die Einspeiseeinheit 28 kann auch als Wechselrichter zum Einspeisen von elektrischer Energie in das Netz 12 betrieben werden.

Der Umrichter 32 kann ebenfalls in bekannter Weise ausgestaltet sein. In dem vorliegenden Beispiel umfasst er drei Halbbrücken, von denen in FIG 2 lediglich eine Halbbrücke 36 (ohne Verschaltungselemente) dargestellt ist. Der Umrichter 32 ist hier als Wechsel- und als Gleichrichter betreibbar.

Der Einspeiseeinheit 28 sind hier netzseitig Drosseln L₁***,*** L₂***,*** L₃ vorgeschaltet. Diese verhindern, dass von der Einspeiseeinheit 28 bei der Spannungswandlung erzeugte Störsignale als Oberwellen in das Netz 12 übertragen werden. Die Einspeiseeinheit 28 kann in dem Beispiel auch als Hochsetzsteller betrieben werden, der eine Gleichspannung U_{ZK} mit einem Effektivwert erzeugt, der unabhängig von einem Effektivwert der Netzspannung ist. Die Drosseln L₁***,*** L₂***,*** L₃ sind deshalb als Kommutierungsinduktivitäten ausgelegt. Die Drosseln L1***,*** L₂***,*** L₃ verhindern somit, dass in einem getakteten Betrieb der Einspeiseeinheit 28 erzeugte Kurzschlüsse zwischen den einzelnen Phasen R, S, T in der Einspeiseeinheit 28 zu einem Kommutierungsstrom mit einer kritischen Stromstärke führen.

Ein umrichterseitiger Teil 38 des Zwischenkreises 30 und ein einspeiseseitiger Teil 40 sind über eine Schalteinrichtung 42 miteinander verschaltet, die einen einspeiseseitigen Anschluss A, einen umrichterseitigen Anschluss B und einen als Steuereingang fungierenden Anschluss C aufweist. Der Steuereingang C ist mit einer Steuereinheit 44 gekoppelt.

Im umrichterseitigen Teil 38 befindet sich ein Zwischenkreiskondensator 46, der eine Pluspotential-Stromschiene 48 und eine Minuspotential-Stromschiene 50 kapazitiv miteinander koppelt. Eine Kapazität des Zwischenkreiskondensators 46 kann in dem gezeigten Beispiel größer 1 mF sein. Die durch den Zwischenkreiskondensator 46 bereitgestellte Zwischenkreiskapazität kann auch durch eine Reihen- oder Parallelschaltung mehrerer Bauelemente bereitgestellt sein.

Die Schalteinrichtung 42 weist in dem Beispiel einen SiC-MOSFET 54 auf, über den die Anschlüsse A und B miteinander gekoppelt sind. Der SiC-MOSFET 54 ist hier ein selbstsperrendes Bauteil. Die Steuereinheit 44 steuert einen Durchgangswiderstand des SiC-MOSFET 54 zwischen den Anschlüssen A und B durch entsprechendes Einstellen einer Steuerspannung am Steuereingang C. Anstelle des SiC-MOSFET 54 kann beispielsweise auch ein SiC-JFET in der Schalteinrichtung 42 verwendet sein.

Eine Diode 56 ermöglicht in einem Generatorbetrieb der elektrischen Maschine 14 einen Stromfluss vom Anschluss B zum Anschluss A.

In dem einspeiseseitigen Teil 40 sind die Stromschienen des Zwischenkreises über einen Kommutierungskondensator 52 kapazitiv miteinander gekoppelt. Der Kommutierungskondensator 52 kann ein Keramik- oder Folienkondensator sein. Die durch den Kommutierungskondensator 52 bereitgestellte Kommutierungskapazität kann auch durch eine Reihen- oder Parallelschaltung mehrerer Bauelemente bereitgestellt sein.

Durch den Kommutierungskondensator 52 können Spannungsspitzen gedämpft werden, die von den Drosseln L₁***,*** L₂***,*** L₃ oder von Induktivitäten des Netzes 12 in dem Zwischenkreis 30 erzeugt werden können. Der Kommutierungskondensator 52 muss dazu im Verhältnis zur Kapazität des Zwischenkreiskondensators 46 nur eine geringe Kapazität aufweisen. Die Kommutierungskapazität des Kommutierungskondensators 52 ist in diesem Beispiel kleiner als 5 µF. Sie ist aber im Allgemeinen in Abhängigkeit von einer über den Frequenzumrichter 26 leitbaren Gesamtleistung gewählt, wobei sie zudem bevorzugt weniger als zehn Prozent einer Kapazität des Zwischenkreiskondensators 46 beträgt.

Der Zwischenkreiskondensator 46 weist eine so große Kapazität auf, dass beim Schließen des Hauptschützes 24 die Halbbrücke 34 (und die übrigen Halbbrücken der Einspeiseeinheit 28) beschädigt würden, wenn der Ladestrom des Zwischenkreiskondensators 46 nicht begrenzt würde. Bei dem Frequenzumrichter 26 wird der Zwischenkreiskondensator 46 in einer Vorladephase mit einem Ladestrom aufgeladen, dessen Stromstärke einen kritischen Wert nicht überschreitet. Dazu stellt die Steuereinheit 44 die Steuerspannung am Anschluss C derart ein, dass eine Stromstärke des durch den SiC-MOSFET 54 fließenden Ladestroms des Zwischenkreiskondensators 46 entsprechend begrenzt ist.

Diese Vorladung des Zwischenkreises 30, d.h. das Aufladen des Zwischenkeiskondensators 46, kann getaktet realisiert werden. Das Hauptschütz 24 wird eingeschaltet, während der SiC-MOSFET 54 sperrt. Die Stromaufnahme der Einspeiseeinheit 28 ist nur durch die Kommutierungsinduktivität der Drosseln L₁***,*** L₂***,*** L₃ begrenzt. Da der Kommutierungskondensator 52 mit seiner geringen Kapazität verhältnismäßig schnell auf einen Gleichrichtwert der Netzspannung geladen ist, steigt der Strom durch die Halbbrücken der Einspeiseeinheit 28 trotz der harten, d.h. abrupten, Anschaltung des Kommutierungskondensators 52 auf verhältnismäßig geringe Stromstärken an. Der Zwischenkreiskondensator 46 ist zu diesem Zeitpunkt durch die Schalteinheit 42 von der Einspeiseeinheit 28 abgekoppelt und wird deshalb nicht geladen.

Anschließend lädt der SiC-MOSFET 54 taktend (Puls-Pause-Zeiten werden in Abhängigkeit von einem Leistungsbedarf während der Vorladephase und der Größe des Zwischenkreises von der Steuereinheit 44 eingestellt) den Zwischenkreiskondensator 46 und weitere (nicht dargestellte) kapazitive Bauteile des umrichterseitigen Teils 38 durch einen Strom aus dem Netz 12 über die Drosseln L₁***,*** L₂***,*** L₃, die Halbbrücke 34 und die übrigen Halbbrücken der Einspeiseeinheit 28 und den SiC-MOSFET 54 mit elektrischer Energie auf. Nach Erreichen einer vorbestimmten Vorladeschwellenwertspannung wird der SiC-MOSFET 54 dauerhaft in den leitenden Zustand geschaltet, so dass ein möglichst geringer Spannungsabfall an ihm entsteht. Die in der Betriebsphase auftretenden Verluste sind somit relativ gering.

Eine weitere Möglichkeit, den Ladestrom des Zwischenkreiskondensators 46 zu steuern, besteht darin, den SiC-MOSFET 54 nur zu einem Teil aufzusteuern, anstatt ihn taktend anzusteuern, um somit den über dem SiC-MOSFET 54 entstehenden Spannungsabfall als Strombegrenzung zu nutzen und so wiederum den umrichterseitigen Teil 38 des Zwischenkreises 30 vorzuladen.

Durch die Steuereinheit 44 kann hierbei auch ermöglicht sein, dass der Zwischenkreiskondensator 46 in Abhängigkeit von einer Zwischenkreisspannung, z.B. der Gleichspannung U_{ZK} zwischen ZK+ und ZK- oder der Spannung über dem Zwischenkreiskondensator 46, und/oder auch des Ladestromes geregelt aufgeladen wird.

Die Gatespannung des SiC-MOSFET 54, d.h. die Steuerspannung am Anschluss C der Schalteinrichtung 42, kann auch derart geregelt ausgeführt sein, dass bereits während der Vorladephase eine Last mittels des Umrichters 32 betrieben werden kann. Die Last, d.h. eine Leistungsabgabe des Umrichters 32, kann dabei sogar über der Zeit variieren. Bei Verwendung einer Regelung kann zudem auch ein Zwischenkreiskondensator mit einer unbekannten Kapazität gefahrlos aufgeladen werden.

Der SiC-MOSFET 54 bietet folgende Vorteile: Er ist hier bis mindestens 1200 V sperrspannungsfähig. Er ist unter Stromfluss schaltbar. Er weist einen geringen RDSon (Resistance Drain-Source, on - Durchlasswiderstand bei größtmöglich einstellbarer Leitfähigkeit) auf.

Es ergeben sich folgende weitere Vorteile: Der SiC-MOSFET 54 kann bei einem DC-Kurzschluss (DC - Gleichstrom) den umrichterseitigen Teil 38 stromunabhängig von der Netzseite trennen. Der SiC-MOSFET 54 ist im Zwischenkreis 30 zudem im Vergleich zu einem netzseitig der Einspeiseeinheit 28 vorgeschalteten Bauteil einem geringen Lastwechsel ausgesetzt, so dass der SiC-MOSFET 54 entsprechend geringen Temperaturschwankungen ausgesetzt ist. Da Temperaturhübe die Lebensdauer von Halbleiterschaltern verringern, ist der SiC-MOSFET 54 somit besonders schonend betrieben.

Ein Halbleiterschalter wie der SiC-MOSFET 54 weist keine verschleißanfälligen Komponenten auf, wie sie in mechanischen Schaltern (Schütz, Relais) vorhanden sind.

Schließlich kann mittels der Schalteinheit 42 ein Zwischenkreis mit besonders großer Kapazität geladen werden, ohne dass es zu einer Überhitzung eines Bauteils des Frequenzumrichters 26 kommt. Somit kann in dem umrichterseitigen Teil 38 eine besonders große Zwischenkreiskapazität bereitgestellt sein.

Indem der SiC-MOSFET 54 im Zwischenkreis 30 angeordnet ist, kann er also für zwei Schutz-Funktionalitäten eingesetzt werden. Er dient einmal zum Vorladen des Zwischenkreiskondensators 46. Zugleich dient er als Zwischenkreisschalter zur Sicherheitsabschaltung, der während jedes Lastzustands der elektrischen Maschine 14 bei einem Kurzschluss das Netz 12 vom umrichterseitigen Teil 38 (und somit auch dem nachgeschalteten Umrichter 32 und der elektrischen Maschine 14) trennt und so eine Zerstörung von Komponenten der Einspeiseeinheit 28 verhindert.

Die Schalteinrichtung 42 ist in dem in FIG 2 gezeigten Beispiel in einem Zweig des Zwischenkreises angeordnet, der das Plus-Potential aufweist. Sie kann aber auch in einem Zweig mit Minus-Potential angeordnet sein.

Ein rückwärtiger Strom im Generatorbetrieb der elektrischen Maschine 14 kann entweder über die parasitäre Diode des SiC-MOSFET 54 selbst oder (falls wie in dem gezeigten Beispiel vorhanden) über die antiparallel geschaltete Diode 56 geführt sein.

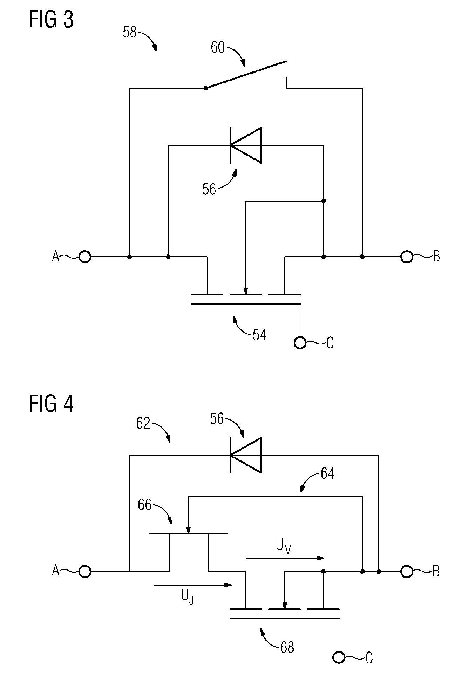

In FIG 3 ist eine Schalteinrichtung 58 gezeigt, die in einen (nicht weiter dargestellten) Frequenzumrichter eingebaut ist. Über Anschlüsse A, B, C der Schalteinrichtung 58 ist diese in einem Zwischenkreis des Frequenzumrichters in der gleichen Weise verschaltet wie die Schalteinrichtung 42 des Frequenzumrichters 26. In der Schalteinrichtung 58 weisen ein SiC-MOSFET 54 und eine Diode 56 dieselbe Funktion wie bei der Schalteinrichtung 42 auf. Deshalb sind in FIG 3 für diese Elemente dieselben Bezugszeichen vergeben.

Die Schalteinrichtung 58 weist zusätzlich einen elektromechanischen Schalter 60 auf. Dabei kann es sich beispielsweise um ein Schütz oder ein Relais handeln. Über eine (nicht dargestellte) Steuerleitung der Schalteinrichtung 56 wird der Schalter 60 nach dem Vorladen eines Zwischenkreiskondensators des Frequenzumrichters zu Beginn der Betriebsphase geschlossen. Der geringe ohmsche Widerstand des geschlossenen Schalters 60 verursacht einen wesentlich geringeren Spannungsabfall über den Anschlüssen A und B als es der Durchlassspannungsabfall des SiC-MOSFET 54 allein tun würde. Die Parallelschaltung aus dem elektromechanischen Schalter 60 und einem elektronischen SiC-Leistungsschalters (hier dem SiC-MOSFET 54) bietet gegenüber einer reinen SiC-MOSFET/JFET-Beschaltung folgenden Vorteil: Der SiC-Leistungsschalter kann kleiner und damit kostengünstiger ausgelegt sein, da er im normalen Betrieb, d.h. in der Betriebsphase, keinen Laststrom mit großer Stromstärke leiten muss. Dieser Strom wird über den elektromechanischen Schalter geführt. Insgesamt ergeben sich dadurch geringere Leitverluste. Bei dieser Beschaltung ist es sogar möglich, einen Si-Transistor mit einem verhältnismäßig großen Durchlasswiderstand als elektronischen Leistungsschalter zu verwenden.

Ein durch die Schalteinrichtung 58 geführter Laststrom des Frequenzumrichters wird gemäß folgendem Verfahren (beispielsweise bei einem Kurzschluss) unterbrochen. Bei geöffnetem, d.h. im sperrenden Zustand befindlichen, SiC-MOSFET 54 wird dieser zunächst in einen leitenden Zustand geschaltet. Dann wird der Schalter 60 geöffnet und danach der SiC-MOSFET 54 in den sperrenden Zustand geschaltet. Hierdurch wird vermieden, dass der elektromechanische Schalter 60 unter Last geöffnet wird, was zu seiner Zerstörung führen könnte.

Der elektromechanische Schalter 60 kann auch zum Leiten eines Stromes von einem Generator in ein Netz verwendet werden. In diesem Fall kann die Diode 56 für eine geringere Nennleistung ausgelegt sein, so dass ein kostengünstigerer Typ einer Diode verwendet werden kann. Es kann gegebenenfalls auch ganz auf sie verzichtet werden.

In FIG 4 ist eine Schalteinrichtung 62 eines (nicht weiter dargestellten) Frequenzumrichters gezeigt, die in ihrer Funktionalität der Schalteinrichtung 42 entspricht. Die Schalteinrichtung 62 kann über Anschlüsse A, B, C in der gleichen Weise verschaltet sein wie die Schalteinrichtung 42.

Bei der Schalteinrichtung 62 bildet eine Kaskodenschaltung 64 aus einem JFET 66 und einem selbstsperrenden MOSFET 68 einen elektronischen Leistungsschalter, der über eine Steuerspannung am Anschluss C steuerbar ist. Im sperrenden Zustand der Kaskodenschaltung 64 beträgt eine über dem JFET 66 abfallende Spannung U_{J} in dem gezeigten Beispiel 1200 V, eine über dem MOSFET 68 abfallende Spannung UM dagegen nur 50 V. Dadurch wird eine Sperrschicht des MOSFET 68 vor Beschädigungen aufgrund eines zu hohen Spannungswerts der Spannung UM geschützt. Die Kaskodenschaltung 64 ist des Weiteren selbstsperrend, so dass bei einer Steuerspannung von 0 V am Anschluss C ein Stromfluss vom Anschluss A zum Anschluss B verhindert ist.

Die Schalteinrichtung 62 kann auch (wie in FIG 4 dargestellt) eine Diode 56 und/oder einen (in FIG 4 nicht dargestellten) elektromechanischen Schalter wie den Schalter 60 aufweisen. Durch die Beispiele ist gezeigt, wie bei einem erfindungsgemäßen Frequenzumrichter ein wirksamer Schutz von Bauteilen desselben bereitgestellt ist.

## Patentansprüche

1. Frequenzumrichter (26) zum Betreiben einer elektrischen Maschine (14) an einem elektrischen Netz (12), wobei der Frequenzumrichter (26) eine Einspeiseeinheit (28) und einen Umrichter (32) aufweist, die miteinander über einen Gleichspannungs-Zwischenkreis (30) verschaltet sind, in dem zumindest ein Zwischenkreiskondensator (46) bereitgestellt ist, **dadurch gekennzeichnet, dass** der Zwischenkreis (30) eine Schalteinrichtung (42,58,62) mit einem Halbleiterschalter (54,64) aufweist, welche zum wahlweisen Unterbrechen eines von der Einspeiseeinheit (28) in einen umrichterseitigen Teil (38) des Zwischenkreises (30) fließenden elektrischen Stromes ausgelegt ist, wobei der zumindest eine Zwischenkreiskondensator (46) in dem umrichterseitigen Teil (38) angeordnet ist.

2. Frequenzumrichter (26) nach Anspruch 1, wobei der Halbleiterschalter (54,64) einen Transistor, insbesondere einen SiC-MOSFET (54,68) oder einen SiC-JFET (66) oder einen Si-Transistor, umfasst.

3. Frequenzumrichter (26) nach Anspruch 1 oder 2, wobei bei der Schalteinrichtung (62) ein MOSFET (68) und ein JFET (66) zu einer Kaskodenschaltung (64) miteinander verschaltet sind.

4. Frequenzumrichter (26) nach einem der vorhergehenden Ansprüche, bei welchem die Schalteinrichtung (58) zusätzlich einen mechanischen Schalter (60) zum Überbrücken des Halbleiterschalters (54) aufweist.

5. Frequenzumrichter (26) nach einem der vorhergehenden Ansprüche, bei welchem der Zwischenkreis (30) einspeiseseitig (40) der Schalteinrichtung (42,58,62) einen weiteren Kondensator (52) als Kommutierungskapazität für die Einspeiseeinheit (28) aufweist.

6. Frequenzumrichter (26) nach einem der vorhergehenden Ansprüche, wobei der Zwischenkreis (30) zumindest zwei Zwischenkreiskondensatoren aufweist, die in einer Reihen- oder Parallelschaltung miteinander verschaltet sind.

7. Frequenzumrichter (26) nach einem der vorhergehenden Ansprüche, bei welchem die Schalteinrichtung (42, 58) eine Diode (56) aufweist, die dazu ausgelegt ist, einen Strom von dem umrichterseitigen Teil (38) des Zwischenkreises (30) zu der Einspeiseeinheit (28) zu leiten.

8. Verfahren zum Betreiben eines Frequenzumrichters (26) gemäß einem der vorhergehenden Ansprüche, umfassend die Schritte:
- Koppeln der Einspeiseeinheit (28) mit einem Netz (12);
- in einer Vorladephase Aufladen des Zwischenkreiskondensators (46) mit elektrischer Energie aus dem Netz (12) und hierbei Steuern eines Ladestromes des Zwischenkreiskondensators (46) mittels des Halbleiterschalters (54,64).

9. Verfahren nach Anspruch 8, bei welchem in der Vorladephase zum Steuern des Ladestromes ein getaktetes oder pulsweitenmoduliertes Steuersignal an einen Steuereingang (C) des Halbleiterschalters (54,64) übertragen wird.

10. Verfahren nach Anspruch 8, bei welchem in der Vorladephase der Halbleiterschalter (54,64) zum Steuern des Ladestromes als steuerbare Stromquelle betrieben wird und hierbei ein Laststrom durch den Halbleiterschalter (54,64) durch Einstellen einer Steuerspannung oder eines Steuerstromes an einem Steuereingang (C) des Halbleiterschalters (54,64) gesteuert wird.

11. Verfahren nach einem der Ansprüche 8 bis 10, wobei mittels einer Regelschaltung ein Steuersignal für einen Steuereingang (C) des Halbleiterschalters (54,64) in Abhängigkeit von einer Spannung im umrichterseitigen Teil (38) des Zwischenkreises (30) erzeugt wird.

12. Verfahren nach einem der Ansprüche 8 bis 11, wobei in einer Betriebsphase nach einer Unterbrechung eines aus dem Netz (12) von der Einspeiseeinheit (28) empfangenen elektrischen Leistungsflusses der Zwischenkondensator (46) in einer Nachladephase durch Steuern eines Ladestromes des Zwischenkreiskondensators (46) mittels des Halbleiterschalters (54,64) wieder aufgeladen wird.

13. Verfahren nach einem der Ansprüche 8 bis 12, wobei ein Ladezustand des Zwischenkreiskondensators (46) beobachtet wird und die Vorladephase abgebrochen und die Schalteinrichtung (42,58,62) in einen sperrenden Zustand geschaltet wird, falls nach einer vorbestimmten Zeitdauer nach Beginn der Vorladephase der Ladezustand ein vorbestimmtes Kriterium erfüllt.
